# EUROPEAN PATENT APPLICATION

(11) **EP 4 563 938 A1**
(43) Date of publication of application: **04.06.2025**
(21) Application number: 23212498.2
(22) Date of filing: 28.11.2023
(51) Int. Cl.: G01B 11/25, H04N 13/254

(54) **SYSTEM AND METHOD FOR 3D IMAGING**

(71) Applicant: Koninklijke Philips N.V., 5656 AG Eindhoven (NL)
(72) Inventor: VAREKAMP, Christiaan, 5656 AG Eindhoven (NL); JOHNSON, Mark Thomas, 5656 AG Eindhoven (NL)
(74) Representative: Philips Intellectual Property & Standards

(57) **Abstract**

A method and system for 3D imaging. A light projector illuminates a scene with a first light pattern, and an image of the scene illuminated with the first light pattern is acquired. The light projector then illuminates the scene with one or more further light patterns, and, for each further light pattern, an image of the scene illuminated by the further light pattern is acquired. Depth analysis is performed on at least one of the images. The images are combined to produce a combined image, in which the first light pattern and each of the one or more further patterns are less perceptible.

## Description

### FIELD OF THE INVENTION

The invention relates to the field of 3D imaging, and in particular to 3D imaging techniques including active stereo depth estimation.

### BACKGROUND OF THE INVENTION

Stereo depth estimation is frequently used in 3D imaging applications, such as immersive 3D video.

Passive stereo depth estimation uses two or more cameras to image a scene from different viewpoints, enabling depth to be calculated based on the difference in position between corresponding points in the images acquired by the different cameras. However, passive stereo can be unreliable and inaccurate when estimating the depth of a homogeneous interior region of an object's surface (away from the object's edges), due to the difficulty of matching corresponding points within such a region.

Active stereo techniques address this problem by projecting patterned light onto the scene being imaged, thus providing "texture" to the interiors of surfaces. This allows corresponding points to be identified more accurately.

In order to avoid the projected patterned light being visible in images of a scene that are provided to a user (e.g. via a virtual reality headset), active stereo techniques generally use projected infrared light, rather than visible light. This means that two additional infrared image sensors are needed to estimate depth. Moreover obtaining the calculated depth in the image coordinates of an additional RGB camera requires a view-point shift for each depth pixel. This view-point shift can introduce errors into the warped depth map due to depth noise that can only be reduced once the per pixel depth is combined with per pixel color in the color image coordinate system. The additional warp step also introduces holes inside objects due to surface expansion and holes due to de-occlusion.

There is therefore a need for improved depth estimation.

### SUMMARY OF THE INVENTION

The invention is defined by the claims.

According to examples in accordance with an aspect of the invention, there is provided a method for 3D imaging, the method comprising: controlling a light projector to illuminate a scene with a first light projection having a first pattern for performing depth analysis of the scene; controlling one or more cameras to each acquire a first image frame of the scene illuminated by the first light projection; controlling the light projector to illuminate the scene with one or more further light projections, each having a further pattern, wherein each of the one or more further patterns is different to the first pattern; controlling each camera to acquire a further image frame of the scene for each illumination by the one or more further light projections; obtaining the first image frame and each further image frame from each camera; processing at least one of the image frames obtained from each camera to determine a depth value for at least a subset of pixels in each image frame; and for each camera, combining the first image frame and each further image frame acquired by the camera to produce a combined image frame, wherein the one or more further patterns are configured such that the first pattern is less perceptible in each combined image frame than in each first image frame and each of the one or more further patterns is less perceptible in each combined image frame than in each respective further image frame.

In other words, image frames containing different spatially-varying projection patterns are combined to provide a combined image frame, for outputting to a user, in which the projection patterns are effectively removed from (or at least made less visible in) the image. One or more of the image frames in which a projection pattern is clearly visible is used for depth analysis.

In this way, projections of visible light may be used in an active stereo system, removing a source of error in depth estimation compared with the use of infrared light, without adversely affecting the image(s) provided to a user.

Preferably, the first pattern and each of the one or more further patterns are imperceptible in each combined image frame. The first pattern and each further pattern may be considered to be imperceptible in the combined image frame(s) if these patterns cannot be detected in the combined image frame by the human eye.

In some examples, the method further comprises repeating the steps described above for a plurality of iterations. This produces a series of combined image frames, which may be output to a user as a video.

In some examples, the first pattern and one or more further patterns of a first iteration are different to the first pattern and one or more further patterns of a second iteration, wherein the second iteration is temporally-adjacent to the first iteration. This may improve an accuracy of the depth determination. Alternatively, the same first pattern and one or more further patterns may be used for each iteration.

In some examples, the method further comprises: after an iteration, determining a desired pattern contrast for each of a plurality of regions in the scene; and for subsequent iterations, controlling the light projector such that the first light projection and one or more further light projections illuminate each of the plurality of regions in the scene with a pattern having the desired pattern contrast for the region.

In some examples, the step of determining the desired pattern contrast for each of the plurality of regions in the scene comprises: processing the determined depth values to determine a depth quality metric for each of the plurality of regions in the scene; and for each region in the scene, processing at least the depth quality metric to determine the desired pattern contrast.

The inventors have recognized that the accuracy of depth estimation is improved by increasing the pattern contrast, but that a higher pattern contrast increases a likelihood that the patterns will be visible in the combined image. By controlling the pattern contrast of projected patterns according to a depth quality metric, an appropriate pattern contrast may be provided.

The depth quality metric may, for example, be a depth noise.

In some examples, the step of determining the desired pattern contrast for each of the plurality of regions in the scene comprises: processing at least one of the image frames obtained from at least one camera to determine one or more image properties of each of the plurality of regions in the scene; and for each region in the scene, processing at least the one or more image properties to determine the desired pattern contrast.

The one or more image properties may, for example, include a measure of natural color texture, i.e. a local variation in color values of pixels of the image, not taking into account variation due to the first pattern or further pattern(s). For instance, the desired pattern contrast may be lower for regions having a high natural color texture.

In some examples, the step of determining the desired pattern contrast for each of the plurality of regions in the scene comprises processing at least the determined depth values to determine the desired pattern contrast for each region in the scene.

In some examples, the method further comprises: after an iteration, determining a desired average intensity for each of a plurality of regions in the scene; and for subsequent iterations, controlling the light projector such that the first light projection and one or more further light projections illuminate each of the plurality of regions in the scene with a pattern having the desired average intensity for the region.

In some examples, the step of determining the desired average intensity for each of the plurality of regions in the scene comprises: processing at least one of the image frames obtained from at least one camera to determine one or more image properties of each of the plurality of regions in the scene; and for each region in the scene, processing at least the one or more image properties to determine the desired average intensity.

The one or more image properties may, for example, include a brightness and/or a measure of clipping. For instance, the desired average intensity may be higher for regions having a low brightness.

In some examples, the step of determining the desired average intensity for each of the plurality of regions in the scene comprises processing at least the determined depth values to determine the desired average intensity for each region in the scene.

For instance, the desired average intensity may be higher for regions having higher depth values.

In some examples, the one or more further light projections consists of a single further light projection having a further pattern, wherein the further pattern of the single further light projection is an inverse of the first pattern.

For 3D video applications, the use of two patterns, one of which is the inverse of the other, allows visible light projection patterns to be effectively removed from the output video without reducing a frame rate of the video more than is necessary for the removal of the projection patterns.

In some examples, the step of producing the combined image frame comprises summing the first image frame and the one or more further image frames. For instance, the first image frame and further image frame(s) may be averaged.

There is also proposed a computer program product comprising computer program code means which, when executed on a computing device having a processing system, cause the processing system to perform all of the steps of the method described above.

According to another aspect of the invention, there is provided a processing system for 3D imaging, the processing system being configured to: control a light projector to illuminate a scene with a first light projection having a first pattern for performing depth analysis of the scene; control one or more cameras to each acquire a first image frame of the scene illuminated by the first light projection; control the light projector to illuminate the scene with one or more further light projections, each having a further pattern, wherein each of the one or more further patterns is different to the first pattern; control each camera to acquire a further image frame of the scene for each illumination by the one or more further light projections; obtain the first image frame and each further image frame from each camera; process at least one of the image frames obtained from each camera to determine a depth value for at least a subset of pixels in each image frame; and for each camera, combine the first image frame and each further image frame acquired by the camera to produce a combined image frame, wherein the one or more further patterns are configured such that the first pattern is less perceptible in each combined image frame than in each first image frame and each of the one or more further patterns is less perceptible in each combined image frame than in each respective further image frame.

There is also proposed a 3D imaging system, comprising: a light projector; one or more cameras; and the processing system described above.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates a 3D imaging system, according to an embodiment of the invention;
Fig. 2 illustrates an example of a pair of patterns;
Fig. 3 illustrates a second example of a pair of patterns;
Fig. 4 illustrates a method for adapting the pattern contrast of light projections;
Fig. 5 illustrates a method for adapting an average intensity of light projections; and
Fig. 6 illustrates a method for 3D imaging, according to an embodiment of the invention.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method and system for 3D imaging. A light projector illuminates a scene with a first light pattern, and an image of the scene illuminated with the first light pattern is acquired. The light projector then illuminates the scene with one or more further light patterns, and, for each further light pattern, an image of the scene illuminated by the further light pattern is acquired. Depth analysis is performed on at least one of the images. The images are combined to produce a combined image, in which the first light pattern and each of the one or more further patterns are less perceptible.

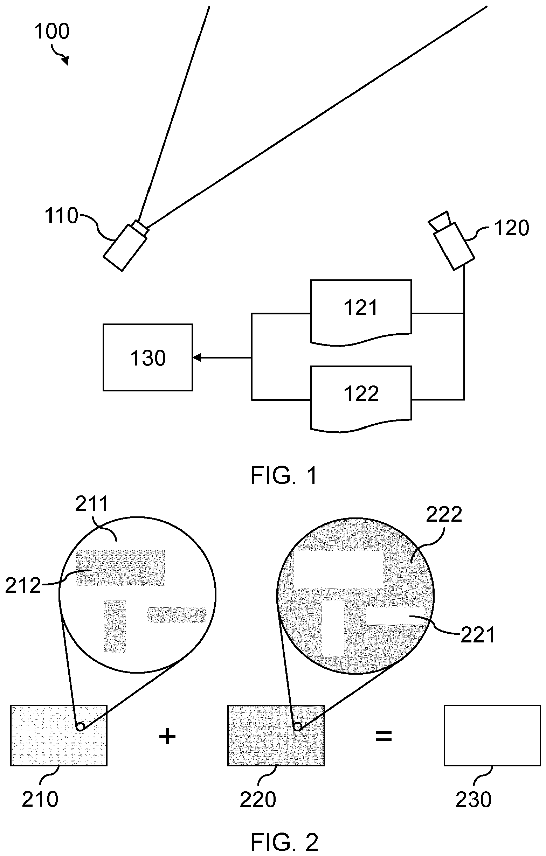

Fig. 1 illustrates 3D imaging system 100, according to an embodiment of the invention. The 3D imaging system 100 comprises a light projector 110, a camera 120, and a processing system 130. The processing system 130 is, itself, an embodiment of the invention.

The light projector 110 is a projector capable of projecting visible light (i.e. light in the visible wavelength range of the electromagnetic spectrum) having spatial variation in intensity. More particularly, the light projector may be capable of providing at least two different projections of light (i.e. light having different spatial variations in intensity) in quick succession. As will become apparent, a desired rate at which the light projector changes from providing one light projection to another will depend on a desired frame rate of output image frames.

Suitable light projectors for use in the 3D imaging system 100 will be readily apparent to the skilled person. For instance, the light projector 110 may use digital light projection (DLP) technology, or may comprise a vibrating light-emitting unit (e.g. a vibrating LED unit), wherein the vibrating light-emitting unit comprises a barrier or lenticular lens. A vibrating light-emitting unit may, for example, be driven by a piezoelectric element vibrating at a frequency equal to a desired rate of change of the light projection provided by the light projector. The light projector may also consist of a micro LED or OLED display with a lenticular lens array or a barrier lens mounted on top. Such a system can generate a spatially varying pattern by displaying images with varying patterns.

In Fig. 1, one camera 120 is provided in the 3D imaging system 100. However, as the skilled person will readily appreciate, any number of cameras may be used in the 3D imaging system. If a single camera is used in the 3D imaging system, the position of the camera relative to the light projector 110 is used for depth determination. If two or more cameras are used in the 3D imaging system, it is not necessary for the position of the cameras relative to the light projector to be known; depth may be determined using the relative positions of the two or more cameras to one another. However, where more than one camera is used, the position of each camera relative to the light projector may be used in addition to the positions of the cameras relative to one another to improve the accuracy of the depth determination.

In Fig. 1, the light projector 110 is shown as a separate element to the camera 120. Alternatively, the light projector may be integrated with one of the one or more cameras of the 3D imaging system.

The processing system 130 is configured to control the light projector 110 to illuminate a scene with a first light projection having a first pattern for performing depth analysis of the scene. The first light projection is a projection of visible light), and the first pattern is provided by spatial variations in the intensity of the projection. For example, the first pattern may consist of regions of a first intensity and regions of a second, lower intensity. The spatial variations in intensity in the first pattern may be regular (i.e. consisting of repeating units) or pseudo-random.

The processing system 130 is configured to control the camera 120 to acquire a first image frame 121. The first image frame is an image of the scene illuminated by the first light projection, and therefore the first pattern is visible in the first image frame. The first pattern provides "texture" in the first image to areas of the image that would otherwise be homogeneous, thus enabling depth estimation for the image to be improved.

If more than one camera is used in the 3D imaging system 100, the processing system 130 may control each camera to acquire a first image frame of the scene illuminated by the first light projection.

The processing system 130 is further configured to control the light projector 110 to illuminate the scene with one or more further light projections, and to control the camera 120 to acquire a further image frame 122 of the scene for each illumination by the one or more further light projections (i.e. each further image frame is an image of the scene illuminated by a respective further light projection). Each further light projection has a further pattern that is different to the first pattern and to any other further patterns of the one or more further light projections. The first pattern and one or more further patterns are described in more detail below.

As above, if more than one camera is used in the 3D imaging system 100, the processing system 130 may control each camera to acquire a further image frame for each illumination by the one or more further light projections.

Fig. 1 shows a single further image frame 122 (i.e. for a single further light projection) being acquired by the camera 120. However, the skilled person will appreciate that the scene may be illuminated sequentially by more than one further projection, and that a further image frame of the scene illuminated by each further projection may be acquired by each camera.

The processing system 130 is configured to obtain the first image frame 121 and each further image frame 122 from the camera 120, and to process at least one of the image frames obtained from the camera to determine a depth value for at least a subset of pixels in the image frame.

If more than one camera is used in the 3D imaging system 100, the processing system may obtain the first image frame and each further image frame acquired by each camera, and process at least one of the image frames obtained from each camera to determine a depth value for at least a subset of pixels in the image frame.

Techniques for determining a depth value for a pixel based on a known relative position between a camera and a light projector projecting a pattern onto a scene, and/or based on a known relative position between difference cameras, are well known, and suitable methods for determining the depth value for at least a subset of pixels of the at least one image frame will be apparent to the skilled person.

For instance, where one camera is used, as in Fig. 1, the depth values for at least a subset of pixels of an image frame may be determined by, for each pixel in the subset, identifying a corresponding point in the projected pattern (i.e. in the first pattern for a pixel in the first image frame, and in the relevant further pattern for a pixel in a further image frame), and triangulating to determine the depth. Where more than one camera is used in the 3D imaging system, the depth values for at least a subset of pixels of an image frame may be determined by, for each pixel in the subset, identifying a corresponding pixel in at least one image frame acquired by a different camera, wherein the at least one image frame in which a corresponding pixel is identified is an image frame of the scene illuminated by the same light projection (i.e. light having the same pattern).

For some pixels, the depth determination process may not result in a valid depth value (e.g. due to occlusion). The depth determination for an image frame may therefore result in a partial depth map that includes undefined depth values for one or more pixels. Various approaches for processing pixels with undefined depth values are known; for instance, a depth value for a pixel with an undefined depth value may be estimated using interpolation, or may be estimated using color information since color capture and depth calculation are co-located in one and the same color camera coordinate system, or a depth may be assigned to the pixel during rendering.

The processing system 130 is further configured to combine the first image frame and each of the one or more further image frames acquired by the camera 120 to produce a combined image frame. In examples in which more than one camera is used in the 3D imaging system, the processing system may be configured to produce a combined image frame for each camera, by combining the first image frame and each of the one or more further image frames acquired by the camera.

Various approaches to producing the combined image frame are envisaged. For instance, the first image frame and each further image frame obtained by the camera 120 may be summed to produce the combined image frame. In some examples, the summing of the first image frame and each further image frame obtained by the camera may be an averaging of the first image frame and the further image frame(s) (e.g. each pixel of the combined image frame may have an RGB value that is the mean or median of the RGB values of the pixels occupying the same position in the first image frame and each further image frame).

A depth value may be assigned to at least a subset of pixels in the combined image frame for each camera, based on the determined depth values for the image frame(s) acquired by the camera.

In some examples, the processing system 130 may be considered to determine depth values for only one of the image frames that are combined to produce the combined image. The depth value assigned to a pixel in the combined image frame may therefore be the determined depth value for the pixel occupying the same position in the image frame for which depth is determined.

In some examples, the processing system 130 may be configured to determine a depth value for each image frame acquired by the camera. The depth value assigned to a pixel in the combined image frame may therefore be an average of the determined depth values for the pixels occupying the same position in the first image frame and each further image frame. This may provide more robust depth values in the combined image frame, by mitigating an effect of errors in the depth determination.

As stated above, the first pattern and each of the one or more further patterns are different to one another. More particularly, the one or more further patterns are configured such that, when combined, the visibility of the first pattern and further pattern(s) is reduced. In other words, the first pattern is less perceptible in the combined image frame than in the first image frame, and each of the one or more further patterns is less perceptible in the combined image frame than in the respective further image frame containing the further pattern. Preferably, the one or more further patterns are configured such that the first pattern and each of the one or more further patterns are imperceptible (i.e. cannot be detected by the human eye) in each combined image frame.

For instance, in examples in which a single further image frame is acquired by each camera (i.e. examples having a first pattern and one further pattern), the further pattern may be an inverse of the first pattern. In other words, the first pattern and further pattern may be configured such that they cancel each other out when added together.

Fig. 2 illustrates an example of a pair of patterns 210, 220 that may be used as the first pattern and further pattern. The first pattern 210 is the inverse of the further pattern 220. Each pattern comprises regions of a first (high) intensity and regions of a second (low) intensity. The patterns are configured such that the positions of the regions of the first (high) intensity 211 in the first pattern 210 are positions of the regions of the second (low) intensity 222 in the second pattern 220. Similarly, the positions of regions of the second (low) intensity 212 in the first pattern are positions of the regions of the first (high) intensity 221 in the second pattern. In this way, a combination 230 of the patterns 210 and 220 has a spatially uniform intensity, such that no pattern is visible in the combination.

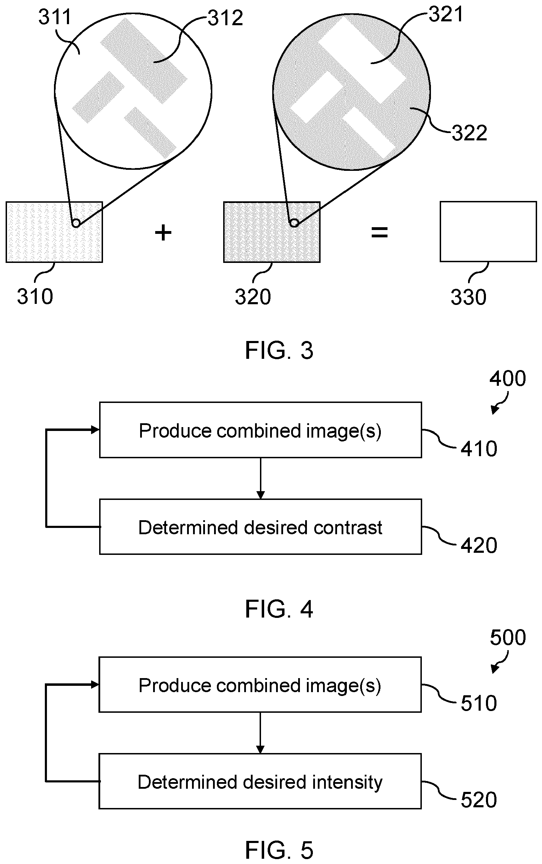

Fig. 3 illustrates a second example of a pair of patterns 310, 320 that may be used as the first pattern and further pattern. The first pattern 310 is the inverse of the further pattern 320. As with the patterns of Fig. 2, each pattern comprises regions of a first (high) intensity and regions of a second (low) intensity. The patterns are configured such that the positions of the regions of the first (high) intensity 311 in the first pattern 310 are positions of the regions of the second (low) intensity 322 in the second pattern 320. Similarly, the positions of regions of the second (low) intensity 312 in the first pattern are positions of the regions of the first (high) intensity 321 in the second pattern. A combination 330 of the patterns 310 and 320 therefore has a spatially uniform intensity, with no pattern visible in the combination.

As the skilled person will readily appreciate, the examples of Figs. 2 and 3 may be extended to sets of first and further patterns with greater numbers of further patterns. For instance, in a set of patterns comprising a first pattern and two further patterns, each pattern may again comprise regions of a first (high) intensity and regions of a second (low) intensity. The patterns may be configured such that the positions of a subset of regions of the second (low) intensity in the first pattern are positions of regions of the first (high) intensity in one further pattern (with the rest of this further pattern having the second intensity), and the positions of the remaining regions of the second (low) intensity in the first pattern are positions of regions of the first (high) intensity in the other further pattern (with the rest of the other further pattern having the second intensity).

Returning to Fig. 1, in some examples, the processing system 130 may be configured to repeat the steps described above for a plurality of iterations. In other words, the processing system may be configured to produce a sequence of combined image frames for each camera of the 3D imaging system 100.

For example, the processing system 130 may control the light projector 110 to change the light projection provided by the light projector (e.g., in the case of two light projections, from the first light projection to the further light projection, then back to the first light projection, and so on) at a predetermined rate. The predetermined rate may be determined such that the changes in light projection do not result in a flickering of light that is visible to any humans present at the scene. For instance, the predetermined rate may be at least 60 Hz.

The processing system may then control the camera 120 to acquire image frames of the scene at the same predetermined rate, synchronized to the changes in light projection, such that an image frame is acquired for each illumination provided by the light projector. The frame rate of the sequence of combined image frames is then 1/N of the predetermined rate, where N is the number of image frames that are combined to produce each combined image frame. For instance, where a first image and a single further image are combined to produce each combined image, the sequence of combined image frames will be half the predetermined rate (e.g. for a predetermined rate of 60 Hz, the sequence of combined image frames has a frame rate of 30 Hz).

In some examples, the processing system 130 may control the camera 120 to acquire image frames of the scene with an exposure time that is shorter than a time interval between changes in light projection. For instance, the exposure time may be between 10% and 90% of the time interval between changes in light projection.

For each iteration of the steps described above, a set of patterns, consisting of a first pattern and one or more further patterns, is used. Each pattern within the set is different. In some examples, the same set of patterns may be used for each iteration. For example, the processing system 130 may be configured to control the light projector to alternate between a first pattern (e.g. the pattern 210 of Fig. 2) and a further pattern (e.g. the pattern 220 of Fig. 2).

In some examples, the processing system 130 may be configured to control the light projector 110 to provide a different set of patterns between temporally-adjacent iterations. In other words, the first pattern and one or more further patterns of a first iteration may be different to the first pattern and one or more further patterns of a second, temporally-adjacent (e.g. immediately subsequent) iteration.

For instance, the patterns 210, 220 of Fig. 2 may be used during a first iteration, and the patterns 310, 320 of Fig. 3 may be used during a second, temporally-adjacent iteration. In other words, the processing system 130 may control the light projector 110 to sequentially illuminate the scene with the pattern 210, followed by the pattern 220, the pattern 310, and the pattern 320. A first image frame containing the pattern 210 may be combined with a further image frame containing the pattern 220 to produce a first combined pattern, and a first image frame containing the pattern 310 may be combined with a further image frame containing the pattern 320 to produce a second combined image. The processing system may then control the light projector to repeat the sequence of light projections, or to illuminate the scene with one or more additional sets of patterns before repeating the sequence.

The use of different sets of patterns for temporally-adjacent iterations may improve the depth estimation accuracy, particularly in depth estimation techniques that make use of temporal depth information (e.g. taking into account a determined depth value for a pixel occupying the same position in a previous image frame), by reducing the effect of local errors in depth estimation. Different sets of patterns will have different positions of borders between regions of higher and lower intensity, and therefore the pixels having the highest degree of confidence for correspondence identification will be different between the different sets of patterns. Therefore, taking into account depth information determined for a previous image frame having a pattern from a different set may have an effect of averaging out local errors in depth determination.

In some examples, the processing system 130 may be configured to evaluate the pattern contrast of the light projections provided by the light projector 110, and to adjust the pattern contrast for subsequent iterations to provide improved results. Fig. 4 illustrates a method 400 for adapting the pattern contrast of light projections.

The method 400 begins at step 410, at which at least one combined image is produced using the steps described above. In other words, one or more iterations of the steps described above are performed.

At step 420, a desired pattern contrast is determined for each of a plurality of regions in the scene. The plurality of regions in the scene are regions for which different pattern contrasts may be desirable; for instance, the regions in the scene may correspond to the positions of different objects in the scene.

In some examples, the desired pattern contrast may be determined based on at least a depth quality. The inventors have recognized that a lower pattern contrast for the first pattern and each further pattern achieves a greater reduction the perceptibility of the first pattern and each further pattern in the combined image. On the other hand, a higher pattern contrast improves an accuracy of depth determination.

The processing system 130 may therefore initially control the light projector to provide the first light projection and one or more further light projections with an initial, low pattern contrast for all regions. For instance, the variation in intensity for each region (i.e. the difference between high intensity areas of the pattern and low intensity areas of the pattern in each region) may initially be 1%-10% of the average intensity. The processing system may then process the depth values determined for at least one image containing a pattern having the initial pattern contrast (i.e. after one or more iterations have been performed using the initial pattern contrast), in order to determine a depth quality metric for each of the plurality of regions in the scene.

Suitable depth quality metrics for assessing the suitability of a current pattern contrast for depth determination will be apparent to the skilled person. For instance, the depth quality metric may be a depth noise. As the color homogeneity of a local image region is indicative of the ability to estimate depth, the local color variation (e.g., mean magnitude of derivatives in an image region) can also be used as a depth quality metric. The lower the local color variation, the higher the chance that depth estimation will fail.

The processing system 130 may then, for each region in the scene, process at least the depth quality metric determined for the region to determine the desired pattern contrast for the region. The desired pattern contrast for a region may, for instance, be determined based on whether or not the depth quality metric for the region exceeds a predetermined quality threshold. For example, in response to a determination that the depth quality metric exceeds the predetermined quality threshold, the current pattern contrast may be set as the desired pattern contrast. In response to a determination that the depth quality metric fails to exceed the predetermined quality threshold, the pattern contrast may be increased (i.e. the desired pattern contrast may be determined as a higher contrast than the current pattern contrast). The value of the quality threshold may be set according to a desired depth determination quality.

The determination of the desired pattern contrast may be additionally or alternatively based on one or more image properties. The inventors have recognized that different objects in a scene typically have different image properties in an image of the scene, due to differences in color texture and reflection properties.

The processing system 130 may be configured to process at least one of the image frames obtained from the camera 120 (i.e. during one or more iterations) to determine one or more image properties of each of the plurality of regions in the scene. The one or more image properties may, for example, comprise one or more of texture (i.e. a variation in color values of pixels of the image), brightness and/or polarization dependent color.

In examples in which more than one camera is used in the 3D imaging system 100, the processing system 130 may process at least one of the image frames obtained by at least one of the cameras. The image properties between image frames from cameras that are close together tend to be very similar; therefore, for computational simplicity, where the distance between two cameras fails to exceed a predetermined baseline threshold, the image frame(s) from only one of the two cameras may be used to determine the one or more image properties for each region. Where the distance between two cameras exceeds a predetermined baseline threshold, image frames from both cameras may be used to determine the one or more image properties for each region, in order to take into account angular variation in the one or more image properties.

The processing system 130 may then, for each region in the scene, process at least the one or more image properties determined for the region to determine the desired pattern contrast for the region.

The determination of the desired pattern contrast may take into consideration the natural color texture that is already visible on surfaces. For example, if an object has a material that is already highly textured, then less additional texture needs to be added to the surface using the light source and the risk of introducing visual artefacts due to the changing light pattern reduces. Therefore, in determining the desired pattern contrast, the processing system 130 may reduce the pattern contrast for any regions having a high natural variation in color (i.e. the desired pattern contrast for such regions may be determined as a lower contrast than the current pattern contrast for the region). In some examples, the processing system may also increase the pattern contrast for any regions having a low natural variation in texture.

Various methods may be used for determining the natural color variation for each region. For instance, the natural color variation may be determined based on at least one image in which the pattern contrast of the light projection was the same for each region, as any local variation in color in the image is then due to the natural texture. As the projected pattern in each image is known, knowledge of the pattern may be used to determine whether variation in color is due to the projected pattern or natural texture. Alternatively, the combined image (in which the patterns are less perceptible) may be used to determine the natural color texture.

The determination of the desired pattern contrast may be additionally or alternatively based on distance. The processing system 130 may process at least the depth values determined during one or more iterations to determine the desired pattern contrast for each of the plurality of regions in the scene.

Having determined the desired pattern contrast, the method 400 returns to step 410, and at least one new combined image frame is produced. Each new combined image frame is produced by combining a first image frame containing the first pattern with the desired pattern contrast for each region and one or more further image frames, each containing a respective further pattern with the desired pattern contrast for each region.

In other words, having determined the desired pattern contrast, for subsequent iterations, the processing system 130 may control the light projector 110 such that the first light projection having the first pattern illuminates each region in the scene with the desired pattern contrast for the region, and each further light projection having a respective further pattern illuminates each region in the scene with the desired pattern contrast for the region.

In some examples, the steps of determining a desired pattern contrast and producing at least one new combined image frame using the determined desired pattern contrast may be repeated until one or more predetermined conditions are satisfied. For instance, the steps may be repeated until the desired pattern contrast for each region is determined to be a current pattern contrast for the region. In some examples, the steps may be repeated at predetermined intervals, in order to account for changes to the scene.

Additionally or alternatively, the processing system 130 may be configured to evaluate the average intensity of the light projections provided by the light projector 110, and to adjust the average intensity for subsequent iterations to provide improved results. Fig. 5 illustrates a method 500 for adapting an average intensity of light projections.

The method 500 begins at step 510, at which at least one combined image is produced using the steps described above with reference to Fig. 1. In other words, one or more iterations of the steps described above are performed.

At step 520, a desired average intensity is determined for each of a plurality of regions in the scene. The plurality of regions in the scene are regions for which different illumination intensities may be desirable; for instance, the regions in the scene may correspond to the positions of different objects in the scene. In examples in which both a desired pattern contrast and a desired average intensity are determined, the regions for which a desired pattern contrast is determined may correspond to the regions for which an average intensity is determined (i.e. the scene may be divided into a plurality of regions, and a desired pattern contrast and desired average intensity may be determined for each region).

In some examples, the desired pattern contrast may be determined based on one or more image properties. The inventors have recognized that differences in reflection properties of different objects in a scene mean that different illumination intensities are required to provide the same amount of scattered light.

The processing system 130 may determine one or more image properties for each region in the scene by processing at least one of the image frames obtained from at least one camera as described above with respect to the pattern contrast adjustment. The one or more image properties may comprise a brightness and/or a measure of clipping.

The processing system may then, for each region in the scene, process at least the one or more image properties determined for the region to determine the desired average intensity.

For instance, the processing system 130 may initially control the light projector to provide the first light projection and one or more further light projections with a same average intensity for all regions. If the one or more image properties includes a brightness, the processing system may increase the average intensity for any regions having a brightness lower than a predetermined brightness threshold (i.e. the desired average intensity for such regions may be determined as a higher average intensity than the current average intensity for the region). If the one or more image properties includes a measure of clipping, the processing system may decrease the average intensity for any regions in which clipping is detected (i.e. the desired average intensity for such regions may be determined as a lower average intensity than the current average intensity for the region).

The determination of the desired average intensity may be additionally or alternatively based on distance. The inventors have recognized that, since the intensity of a light projection decreases as the distance from the source of the light decreases, objects that are further from the light projector require a higher intensity illumination than objects closer to the light projector.

The processing system 130 may therefore process at least the depth values determined during one or more iterations to determine the desired average intensity for each of the plurality of regions in the scene.

For instance, the processing system 130 may initially control the light projector to provide the first light projection and one or more further light projections with a same average intensity for all regions. The processing system may then increase the average intensity for any regions having higher depth values (i.e. the desired average intensity for such regions may be determined as a higher average intensity than the current average intensity for the region).

In some examples, the processing system 130 may determine the desired average intensity for each of the plurality of regions in the scene such that a range of the desired average intensity (i.e. a difference between a highest desired average intensity and a lowest desired average intensity) does not exceed a predetermined threshold, in order to reduce a likelihood that the lighting for the scene appears unnatural due to large differences in lighting for different regions.

Having determined the desired average intensity, the method 500 returns to step 510, and at least one new combined image frame is produced. Each new combined image frame is produced by combining a first image frame of the scene illuminated by the first light projection with the desired average intensity for each region and one or more further image frames, each of the scene illuminated by a respective further light projection with the desired average intensity for each region.

In other words, having determined the desired average intensity, for subsequent iterations, the processing system 130 may control the light projector 110 such that the first light projection illuminates each region in the scene with the desired average intensity for the region, and each further projection also illuminates each region in the scene with the desired average intensity for the region.

In some examples, the steps of determining a desired average intensity and producing at least one new combined image frame using the determined desired average intensity may be repeated until one or more predetermined conditions are satisfied. For instance, the steps may be repeated until the desired average intensity for each region is determined to be a current average intensity for the region. In some examples, the steps may be repeated at predetermined intervals, in order to account for changes to the scene.

In some examples, the processing system 130 may be further configured to control each camera to acquire one or more additional image frames of the scene, in which the scene is not illuminated by a light projection by the light projector 110. For instance, one or more additional (unilluminated) image frames may be acquired between iterations of the steps described above with reference to Fig. 1. The one or more additional image frames may be assigned depth values based on the depth values determined in a most-recent iterations of the steps described above.

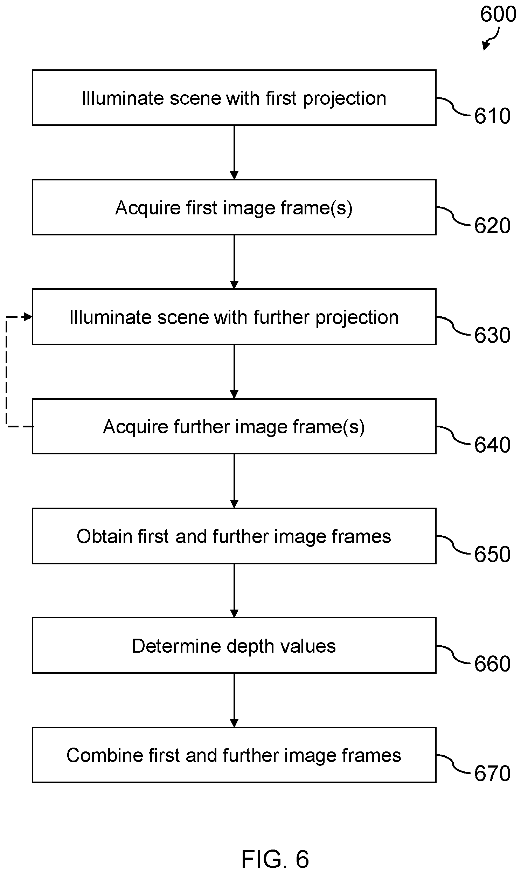

Fig. 6 illustrates a method 600 for 3D imaging, according to an embodiment of the invention.

The method 600 begins at step 610, at which a light projector is controlled to illuminate a scene with a first light projection having a first pattern for performing depth analysis of the scene.

At step 620, one or more cameras are each controlled to acquire a first image frame of the scene illuminated by the first light projection.

At step 630, the light projector is controlled to illuminate the scene with a further light projection having a different pattern to the first pattern.

At step 640, each camera is controlled to acquire a further image frame of the scene illuminated by the further light projection.

In some examples, steps 630 and 640 may be repeated, such that the scene is sequentially illuminated by a plurality of further light projections, each having a different further pattern, and an image is acquired by each camera of the scene illuminated by each further light projection.

At step 650, the first image and each further image are obtained from each camera.

At step 660, at least one of the image frames obtained from each camera is processed to determine a depth value for at least a subset of pixels in the image frame.

At step 670, for each camera, the first image frame and each further image frame acquired by the camera are combined to produce a combined image frame.

The one or more further patterns are configured such that the first pattern is less perceptible in each combined image frame than in each first image frame, and each further pattern is less perceptible in each combined image frame than in each respective further image frame (i.e. each further image frame containing the further pattern).

In some examples, the method 600 may be repeated for a plurality of iterations. The same first pattern and further pattern(s) may be used for each iteration of the method, or different first patterns and further patterns may be used for temporally-adjacent iterations.

Any method described herein may be computer-implemented, where computer-implemented means that the steps of said methods are performed by one or more computers and where a computer is defined as a device suitable for processing data. A computer may be suitable for processing data according to prescribed instructions.

It will be understood that, as the disclosed methods may be computer-implemented methods, there is also proposed a concept of a computer program product comprising code means for implementing any described method when said program is run on a processing system.

The skilled person would be readily capable of developing a processor for carrying out any herein described method. Thus, each step of a flow chart may represent a different action performed by a processor and may be performed by a respective module of the processing processor.

One or more steps of any of the methods described herein may be performed by one or more processors. A processor comprises an electronic circuit suitable for processing data.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

A single processor or other unit may fulfill the functions of several items recited in the claims.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A method (600) for 3D imaging, the method comprising:
controlling a light projector (110) to illuminate a scene with a first light projection having a first pattern (210, 310) for performing depth analysis of the scene;
controlling one or more cameras (120) to each acquire a first image frame (121) of the scene illuminated by the first light projection;
controlling the light projector to illuminate the scene with one or more further light projections, each having a further pattern (220, 320), wherein each further pattern is different to the first pattern;
controlling each camera to acquire a further image frame (122) of the scene for each illumination by the one or more further light projections;
obtaining the first image frame and each further image frame from each camera;
processing at least one of the image frames obtained from each camera to determine a depth value for at least a subset of pixels in each image frame; and
for each camera, combining the first image frame and each further image frame acquired by the camera to produce a combined image frame,
wherein the one or more further patterns are configured such that the first pattern is less perceptible in each combined image frame than in each first image frame and each further pattern is less perceptible in each combined image frame than in each respective further image frame.

2. The method (600) of claim 1, wherein the method further comprises repeating the steps of claim 1 for a plurality of iterations.

3. The method (600) of claim 2, wherein the first pattern (210) and one or more further patterns (220) of a first iteration are different to the first pattern (310) and one or more further patterns (320) of a second iteration, wherein the second iteration is temporally-adjacent to the first iteration.

4. The method (600) of claim 2 or 3, further comprising:
after an iteration, determining a desired pattern contrast for each of a plurality of regions in the scene; and
for subsequent iterations, controlling the light projector (110) such that the first light projection and one or more further light projections illuminate each of the plurality of regions in the scene with a pattern having the desired pattern contrast for the region.

5. The method (600) of claim 4, wherein the step of determining the desired pattern contrast for each of the plurality of regions in the scene comprises:
processing the determined depth values to determine a depth quality metric for each of the plurality of regions in the scene; and
for each region in the scene, processing at least the depth quality metric to determine the desired pattern contrast.

6. The method (600) of claim 4 or 5, wherein the step of determining the desired pattern contrast for each of the plurality of regions in the scene comprises:
processing at least one of the image frames (121, 122) obtained from at least one camera (120) to determine one or more image properties of each of the plurality of regions in the scene; and
for each region in the scene, processing at least the one or more image properties to determine the desired pattern contrast.

7. The method (600) of any of claims 4 to 6, wherein the step of determining the desired pattern contrast for each of the plurality of regions in the scene comprises processing at least the determined depth values to determine the desired pattern contrast for each region in the scene.

8. The method (600) of any of claims 2 to 7, further comprising:
after an iteration, determining a desired average intensity for each of a plurality of regions in the scene; and
for subsequent iterations, controlling the light projector (110) such that the first light projection and one or more further light projections illuminate each of the plurality of regions in the scene with a pattern having the desired average intensity for the region.

9. The method (600) of claim 8, wherein the step of determining the desired average intensity for each of the plurality of regions in the scene comprises:
processing at least one of the image frames (121, 122) obtained from at least one camera (120) to determine one or more image properties of each of the plurality of regions in the scene; and
for each region in the scene, processing at least the one or more image properties to determine the desired average intensity.

10. The method (600) of claim 8 or 9, wherein the step of determining the desired average intensity for each of the plurality of regions in the scene comprises processing at least the determined depth values to determine the desired average intensity for each region in the scene.

11. The method (600) of any of claims 1 to 10, wherein the one or more further light projections consists of a single further light projection having a further pattern (220), wherein the further pattern of the single further light projection is an inverse of the first pattern (210).

12. The method (600) of any of claims 1 to 11, wherein the step of producing the combined image frame comprises summing the first image frame (121) and the one or more further image frames (122).

13. A computer program product comprising computer program code means which, when executed on a computing device having a processing system, cause the processing system to perform all of the steps of the method (600) according to any of claims 1 to 12.

14. A processing system (130) for 3D imaging, the processing system being configured to:
control a light projector (110) to illuminate a scene with a first light projection having a first pattern (210, 310) for performing depth analysis of the scene;
control one or more cameras (120) to each acquire a first image frame of the scene illuminated by the first light projection;
control the light projector to illuminate the scene with one or more further light projections, each having a further pattern (220, 320), wherein each of the one or more further patterns is different to the first pattern;
control each camera to acquire a further image frame (122) of the scene for each illumination by the one or more further light projections;
obtain the first image frame and each further image frame from each camera;
process at least one of the image frames obtained from each camera to determine a depth value for at least a subset of pixels in each image frame; and
for each camera, combine the first image frame and each further image frame acquired by the camera to produce a combined image frame,
wherein the one or more further patterns are configured such that the first pattern is less perceptible in each combined image frame than in each first image frame and each of the one or more further patterns is less perceptible in each combined image frame than in each respective further image frame.

15. A 3D imaging system (100), comprising:
a light projector (110);
one or more cameras (120); and
the processing system (130) of claim 14.
